# EUROPÄISCHE PATENTSCHRIFT

(11) **EP 4 519 610 B1**
(45) Veröffentlichungstag und Bekanntmachung des Hinweises auf die Patenterteilung: **28.10.2026**
(21) Anmeldenummer: 23717990.8
(22) Anmeldetag: 14.04.2023
(51) Int. Cl.: F24C 15/32, F24C 15/18, F24C 15/00, F24C 15/16

(54) **DAMPFGARGERÄT MIT RAUMTEILER**
STEAM COOKING APPLIANCE HAVING A PARTITION
APPAREIL DE CUISSON À LA VAPEUR AYANT UNE CLOISON

(30) Priorität: 02.05.2022 DE 102022204277
(43) Veröffentlichungstag der Anmeldung: 12.03.2025
(73) Patentinhaber: BSH Hausgeräte GmbH, 81739 München (DE)
(72) Erfinder: WAGNER, Benjamin, 75015 Bretten (DE); SAUERBIER, Rolf, 76275 Ettlingen (DE); BALL, Ludovic, 67770 Sessenheim (FR)
(86) Internationale Anmeldenummer: PCT/EP2023/059758
(87) Internationale Veröffentlichungsnummer: WO 2023/213515

(56) Entgegenhaltungen:
- EP-A1- 0 641 976
- EP-A1- 1 275 333
- EP-A1- 3 470 739
- WO-A1-2020/108917
- US-A1- 2002 060 215

## Beschreibung

Die Erfindung betrifft ein Dampfgargerät, insbesondere Haushalts-Dampfgargerät, in der Form einer Dampfgarschublade, aufweisend einen in mindestens zwei Teilräume unterteilbaren Dampfbehandlungsraum, einen Nassdampferzeuger, einen Dampfzufuhrkanal, der dazu eingerichtet ist, von dem Nassdampferzeuger erzeugten Dampf in den Dampfbehandlungsraum zu leiten, und mindestens einen Dampfablasskanal, der dazu eingerichtet ist, Dampf aus dem Dampfbehandlungsraum abzuleiten.

DE 10 2007 039 379 B4 offenbart ein Gargerät mit einem Garraum, der in mehrere offen miteinander verbundene Klimazonen unterteilbar ist, und mit einer Vorrichtung zur Erzeugung sowie zur Führung von Dampf-Luft-Gemischen im Garraum, wobei jeder Klimazone ein Dampf-Luft-Gemisch zuordbar ist, und die Strömungsgeschwindigkeiten jedes Dampf-Luft-Gemischs im Garraum derart einstellbar sind, dass ein Durchströmen des Garraums entlang einer Vielzahl von im Wesentlichen horizontalen und/ oder parallelen Strömungspfaden, im Wesentlichen ohne gegenseitige Beeinflussung der Klimata in den Klimazonen, erzwingbar ist, wobei die Vorrichtung zur Erzeugung sowie zur Führung der Dampf-Luft-Gemische zumindest eine Dampferzeugungseinrichtung, eine Vielzahl von Dampfzufuhreinrichtungen, zumindest eine Dampfabfuhreinrichtung, zumindest eine Einrichtung zur Erzeugung einer Strömung (mit zumindest einem Gebläse oder zumindest einer Pumpe, eine Vielzahl von Strömungsreguliereinrichtungen und zumindest eine Heizvorrichtung umfasst und mit einer Steuer- oder Regeleinrichtung in Wirkverbindung steht, damit das Klima, bestimmt durch zumindest die Temperatur, die Feuchtigkeit und die Strömungsgeschwindigkeit des Dampf-Luft-Gemisches, für jede Klimazone einzeln steuerbar oder regelbar ist.

CN 109567574 A offenbart Kochgeschirr, dass mehrere in vertikaler Richtung gestapelte Dampfbehandlungsschalen umfasst, wobei jede Dampfbehandlungsschale einen am Boden angeordneten luftdichten Schalenboden und mehrere in der Umfangswand ausgebildete Lufteinlässe umfasst, wobei die Lufteinlässe zum Einleiten von Dampf dienen. Ein erstes Verbindungsteil ist am oberen Rand jeder Dampfbehandlungsschale angeordnet und ein zweites Verbindungsteil ist am unteren Rand der Dampfbehandlungsschale angeordnet; jeweils zwei benachbarte Dämpfeinsätze sind durch das erste Verbindungsteil und das zweite Verbindungsteil, die gegenüberliegend angeordnet sind, einstückig gestapelt. Durch Ausbilden der Lufteinlässe in jeder Dampfbehandlungsschale kann eine unabhängige Luftversorgung jeder Dampfbehandlungsschale erreicht werden, und die Dampfbehandlungsschalen sind mit den luftdichten Schalenböden sowie den ersten Verbindungsteilen und den zweiten Verbindungsteilen versehen, die in der Lage sind, eine gegenseitige geschlossene Verbindung zu realisieren, so dass das Problem der Geruchsbelästigung gelöst wird, wenn verschiedene Lebensmittel durch einen Dampfgarer gedämpft werden.

EP 2 299 181 B1 offenbart einen beheizbaren Raumteiler, mittels dessen eine Ofenraum in zwei übereinanderliegende, individuell heizbare Teilräume unterteilbar ist.

CN 209826263 U offenbart einen Dampfofen mit variablem Garraumvolumen, das durch Einsatz eines dampfdichten Raumteilers verkleinerbar ist.

WO 2014/095659 A1 offenbart einen Ofen mit einem Kochtopf mit einer Schale, einem Deckel, der die Oberseite der Schale bedeckt, und einer Ablage, die auf der Schale angeordnet ist und auf dem zu kochende Speisen platziert werden. Der Kochtopf umfasst in der Schale ein erstes Fach, in dem die Ablage platziert ist, eine Heizvorrichtung, ein zweites Fach, in dem die Heizvorrichtung platziert ist, und eine zwischen dem ersten Fach und dem zweiten Fach angeordnete Trennwand.

EP 1 275 333 A1 offenbart ein Dampfgargerät mit einem Dampferzeuger und mehreren Garebenen in einem Garraum, in welchem eine Dampfeinlassöffnung als Verbindung zum Dampferzeuger und eine Dampfauslassöffnung angeordnet sind, wobei eine Temperaturmesseinrichtung dem Garraum zugeordnet und mit einer Steuereinrichtung verbunden ist. Zum gezielten Steuern der Temperatur in den einzelnen Garebenen sind ein oder mehrere Dampfeinlassöffnungen und/oder ein oder mehrere Dampfauslassöffnungen den Garebenen zugeordnet und jeweils separate Temperaturmesseinrichtungen in mindestens zwei Garebenen angeordnet.

US 2002060215 A1 offenbart einen Backofen umfassend eine Trenn- und Isolierplatte, die horizontal in den Garraum eingesetzt werden kann, um ihn in zwei Teilgarräume aufzuteilen. Jeder Teilgarraum verfügt an seinen Seitenwänden über Heizelemente.

EP 0 641 976 A1 offenbart einen Backofen mit einem Umluftgebläse. Im Backraum ist ein herausnehmbarer Backraumteiler angeordnet. Im unteren Teil einer Gebläseabdeckplatte sind Ausblasbereiche angeordnet, die durch den Backraumteiler abdeckbar sind.

EP 3 470 739 A1 offenbart ein Gargerät umfassend einen Garraum mit einer verschließbaren Garraumöffnung, eine Steuereinrichtung und eine Unterdruckeinrichtung. In den Garraum ist Dampf und/oder Wasser leitbar. In dem Garraum ist ein Drucksensor angeordnet, wobei die Steuereinrichtung dazu ausgebildet ist, über die von dem Drucksensor erfassten Werte die im Garraum vorherrschende Temperatur abzuleiten und über das Einstellen des Unterdrucks den Dampf in dem Garraum mit einer vorbestimmten Temperatur zu belegen.

WO 2020/108917 A1 offenbart einen Backofen mit einer oberen Trennwand und einer unteren Trennwand, die voneinander getrennt sind; zwei Ventilatoren, von denen einer für die obere Trennwand und der andere für die untere Trennwand verwendet wird; einen Dampferzeuger, der im hinteren Bereich des Gehäuses angeordnet ist; eine Dampfzuleitung, die den erzeugten Dampf in den Garraum leitet; und mindestens eine an der Rückwand des Gehäuses angeordnete Dampfaustrittsöffnung, die eine Abgabe des Dampfes mittels der Ventilatoren in den Garraum ermöglicht.

Es ist die Aufgabe der vorliegenden Erfindung, die Nachteile des Standes der Technik zumindest teilweise zu überwinden und insbesondere eine kostengünstige Möglichkeit für den Haushaltsbereich bereitzustellen, verschiedene Speisen ohne gegenseitige geschmackliche Beeinflussung auf kleinem Raum gleichzeitig individuell mit Dampf zu behandeln.

Diese Aufgabe wird gemäß den Merkmalen des unabhängigen Anspruchs 1 gelöst. Bevorzugte Ausführungsformen sind insbesondere den abhängigen Ansprüchen entnehmbar. Die Aufgabe wird gelöst durch ein Dampfgargerät, aufweisend
- einen mittels mindestens eines Raumteilers in mindestens zwei Teilräume unterteilbaren Dampfbehandlungsraum,
- mindestens einen Raumteiler, der dazu eingerichtet ist, den Dampfbehandlungsraum oder einen Teilraum davon dampfdicht in zwei Teilräume zu unterteilen,
- einen Nassdampferzeuger,
- einen Dampfzufuhrkanal, der dazu eingerichtet ist, von dem Nassdampferzeuger erzeugten Dampf in den Dampfbehandlungsraum zu leiten,
- mindestens einen Dampfablasskanal, der dazu eingerichtet ist, Dampf aus demDampfbehandlungsraum abzuleiten,
   wobei
- der Dampfzufuhrkanal dazu eingerichtet ist, den von dem Nassdampferzeuger erzeugten Dampf in jeden der Teilräume zu leiten.

Dieses Dampfgargerät ergibt den Vorteil, dass ein Dampfbehandlungsraum durch den mindestens einen Raumteiler von einem Nutzer nach Bedarf in zwei oder mehr Teilräume unterteilbar ist. Dies ermöglicht es verschiedene Speisen auf kleinem Raum gleichzeitig individuell mit Dampf zu behandeln. Durch die Dampfdichtigkeit wird eine nicht nur räumliche, sondern auch atmosphärische Trennung der getrennten Teilräume erreicht, und damit eine gegenseitige geschmackliche Beeinflussung zwischen den Teilräumen verhindert. Außerdem lassen sich so unterschiedliche atmosphärische Bedingungen (z.B. in Bezug auf eine Luftfeuchte, Lufttemperatur, Strömungsgeschwindigkeit, usw.) in den Teilräumen konstruktiv einfach umsetzen. Darüber hinaus ist sind ein Energiebedarf und/oder ein Reinigungsaufwand geringer als bei Nutzung eines ungeteilten Dampfbehandlungsraums, und es ergibt sich auch eine schnellere Aufheizzeit. Da die Dampferzeugung für die Teilräume durch einen gemeinsamen Nassdampferzeuger erfolgt, ist die Dampfbehandlung zudem kostengünstig umsetzbar.

Es ist eine Weiterbildung, dass das Dampfgargerät ein Haushalts-Dampfgargerät ist. Das Dampfgargerät kann ein eigenständiges Dampfgargerät oder ein Kombinationsgerät sein, z.B. ein Ofen und/oder ein Mikrowellengerät mit Dampfbehandlungsfunktion (z.B. dem sog. "Added Steam").

Der Dampfbehandlungsraum ist dazu vorgesehen, Gargut aufzunehmen und mittels des Dampfgargeräts bei Bedarf mit Dampf beaufschlagt zu werden.

Die - bei geschlossenem Dampfbehandlungsraum - zwei oder mehr Teilräume sind dampfdicht und damit atmosphärisch voneinander getrennt, d.h. dass, insbesondere während eines Dampfbehandlungsvorgangs, kein Dampf zwischen ihnen ausgetauscht wird. Dass die beiden Teilräume dampfdicht voneinander getrennt sind, umfasst insbesondere auch, dass sie flüssigkeitsdicht voneinander getrennt sind.

Durch Einfügen eines Raumteilers kann ein mit Dampf beaufschlagbarer Raum (d.h., der Dampfbehandlungsraum oder einen Teilraum davon) in zwei jeweils mit Dampf beaufschlagbare Teilräume unterteilt werden, und zwar dampfdicht, so dass ein Austausch von Atmosphäre und ggf. auch Flüssigkeit (z.B. Kondensat) zwischen den beiden Teilräumen verhindert wird. Die beiden Teilräume können durch den Raumteiler also - bei geschlossenem Dampfbehandlungsraum - hermetisch, d.h., gas- und flüssigkeitstechnisch, voneinander getrennt werden. Dies kann so umgesetzt werden, dass zumindest der Dampfbehandlungsraum als Ganzes durch einen Raumteiler in einen ersten Teilraum und einen zweiten Teilraum unterteilt wird. Falls dazu eingerichtet, kann ein weiterer Raumteiler hinzugefügt werden, der den ersten Teilraum weiter in zwei Unter-Teilräume unterteilt, usw. Insgesamt lässt sich der Dampfbehandlungsraum durch n Raumteiler in n+1 voneinander dampfdicht getrennte Teilräume unterteilen.

Der Raumteiler ist insbesondere plattenförmig, insbesondere quaderförmig, ausgebildet und kann insbesondere auch dann als Trennwand bezeichnet werden.

Der in die Teilräume einbringbare Dampf wird durch einen einzigen Nassdampferzeuger erzeugt, der außerhalb des Dampfbehandlungsraums angeordnet ist. Der Nassdampferzeuger erzeugt Nassdampf, d.h., bis zum Siedepunkt von Wasser aufheizbaren Dampf bzw. durch Sieden erzeugten Dampf. Dieser kann noch Wassertröpfchen enthalten und wird deshalb als "nass" bezeichnet.

Es ist eine Weiterbildung, dass dem Dampferzeuger mindestens ein SHS-Dampferhitzer nachgeschaltet ist, der dazu eingerichtet ist, den von dem Nassdampferzeuger erzeugten Nassdampf weiter in überhitzten Dampf umzuwandeln. Unter überhitztem Dampf kann insbesondere über den Siedepunkt von Wasser aufgeheizter Dampf verstanden werden, der auch als Trockendampf oder SHS, "Super Heated Steam" bekannt ist. Der überhitztem Dampf ist so heiß, dass er typischerweise keine Wassertröpfchen mehr aufweist und deshalb auch als "trocken bezeichnet wird. Eine Temperatur des Trockendampfs ist höher als die Siedetemperatur von Wasser und kann z.B. bis zu 200 °C, 300 °C, 400 °C, 500 °C, 600 °C oder sogar noch mehr betragen.

In einer Weiterbildung kann eine außerhalb des Dampfbehandlungsraums angeordnete Kombination aus Nassdampferzeuger und mindestens einem SHS-Dampferhitzer auch als (zweistufiger) Dampferzeuger bezeichnet oder angesehen werden, bei dem in einer ersten Stufe durch Sieden von Wasser Nassdampf erzeugt wird, der in einer zweiten Stufe in überhitzten Dampf umgewandelt wird.

Dass der Dampfzufuhrkanal dazu eingerichtet ist, von dem Nassdampferzeuger erzeugten Dampf (d.h., Nassdampf oder zusätzlich aufgeheizten überhitzen Dampf) in jeden der Teilräume zu leiten, umfasst insbesondere, dass der Dampfzufuhrkanal dazu eingerichtet sein kann, den Dampf grundsätzlich in jeden der Teilräume leiten zu können, insbesondere auch gleichzeitig. Dies schließt nicht aus, dass ggf. gezielt bzw. gesteuert mindestens einer der Teilräume während eines Garvorgangs nicht mit Dampf beaufschlagt wird, wobei aber das Dampfgargerät dazu eingerichtet ist, jeden der Teilräume bei Bedarf mit Dampf zu beaufschlagen.

Dass der Dampfzufuhrkanal dazu eingerichtet ist, von dem Nassdampferzeuger erzeugten Dampf in jeden der Teilräume zu leiten, umfasst ferner, dass der Dampf direkt von dem Nassdampferzeuger in jeden der Teilräume geleitet wird und also nicht durch mehrere Teilräume hindurch.

Der in dem Dampfbehandlungsraum oder den Teilräumen befindliche Dampf (und ggf. Wrasen) kann - vor, während und/oder nach einem Garvorgang - durch den mindestens einen Dampfablasskanal aus dem Dampfbehandlungsraum bzw. den Teilräumen austreten. Der Dampfablasskanal kann beispielsweise zu einer Vorderseite des Dampfgargeräts und/oder zu einer Wrasenabzugsvorrichtung führen. Der Austritt bzw. Ablass des Dampfs aus dem Dampfbehandlungsraum kann durch einen erhöhten Dampfdruck in dem Dampfbehandlungsraum und/oder durch Absaugen, z.B. mittels eines Lüfters, bewirkt werden.

Allgemein kann der Dampfbehandlungsraum mit oder ohne Raumteiler zur Dampfbehandlung von darin untergebrachtem Gargut verwendet werden.

Es ist eine Ausgestaltung, dass der Dampfzufuhrkanal einen mit dem Nassdampferzeuger verbundenen Dampfeingang und mindestens eine Verzweigung mit mindestens zwei zu dem Dampfbehandlungsraum führenden Auslasszweigen aufweist. Dadurch wird der Vorteil erreicht, dass auf konstruktiv einfache Weise mehrere räumlich getrennte Dampfströme in den Dampfbehandlungsraum leitbar sind. Dies kann insbesondere vorteilhaft sein, um auch voneinander weiter auseinanderliegende Raumbereiche des Dampfbehandlungsraums mit hohen Dampfdurchsätzen zu beaufschlagen. Allgemein weist eine Verzweigung einen Einlasszweig und mindestens zwei davon verzweigende bzw. abgehende Auslasszweige auf. Dampf tritt in den Einlasszweig ein und kann grundsätzlich durch die Auslasszweige strömen.

Es ist eine Weiterbildung, dass mindestens zwei Verzweigungen strömungstechnisch hintereinander angeordnet sind, so dass an mindestens einen der Auslasszweige einer vorderen Verzweigung ein Einlasszweig einer strömungstechnisch folgenden Verzweigung anschließt. Dieser Verzweigungsaufbau kann grundsätzlich beliebig oft kaskadiert werden und ermöglicht eine konstruktiv einfache und einfach variierbare Bereitstellung von mehr als zwei Auslasszweigen.

Ist das Dampfgargerät mit mindestens einen SHS-Dampferhitzer ausgerüstet, ist es eine Weiterbildung, dass ein SHS-Dampferhitzer strömungstechnisch vor der mindestens einen Verzweigung angeordnet ist, so dass auf besonders kostengünstige Weise überhitzter Dampf durch alle Verzweigungen strömen kann, wenn der SHS-Dampferhitzer betrieben wird. Es ist eine Weiterbildung, dass allen Auslasszweigen ein jeweiliger SHS-Dampferhitzer zugeordnet ist. So wird der Vorteil erreicht, dass für jeden der Auslasszweig individuell eingestellt werde kann, ob von ihm aus Nassdampf oder überhitzter Dampf in den Behandlungsraum bzw. einen zugehordneten Teilraum strömen soll. Es ist eine Weiterbildung, dass nur einer Teilmenge von Auslasszweigen ein SHS-Dampferhitzer zugeordnet ist. So lässt sich vorteilhafterweise auf immer noch kostengünstige Weise mindestens ein Teilraum nur mit Nassdampf beaufschlagen und mindestens ein weiterer Teilraum mit überhitztem Dampf oder wahlweise mit Nassdampf oder überhitztem Dampf.

Es ist eine Ausgestaltung, dass mindestens eine Verzweigung eine Stelleinrichtung aufweist, die ansteuerbar ist, um einen Dampfdurchsatz durch die Auslasszweige der zugehörigen Verzweigung variabel bzw. anteilig einzustellen. Dies ermöglicht es auf robuste und konstruktiv einfache Weise, den Dampfdurchsatz in mehrere Teilräume anteilig einzustellen und damit - insbesondere auch zusammen mit einer eingestellten Heizleistung des Nassdampferzeugers und ggf. des SHS-Dampferhitzers - eine Luftfeuchte / Luftfeuchtigkeit, Lufttemperatur und/oder Strömungsgeschwindigkeit gezielt für die jeweiligen Teilräume einzustellen. Die Stelleinrichtung ist insbesondere durch das Dampfgargerät einstellbar, z.B. motorisch oder aktorisch. Die Stelleinrichtung ist insbesondere dazu eingerichtet, den Strömungsquerschnitt der Auslasszweige anteilig einzustellen.

Es ist eine Weiterbildung, dass die Stelleinrichtung eine elektrisch - insbesondere motoirisch oder aktorisch - einstellbare Klappe ist, insbesondere eine verschwenkbare Klappe, wobei eine Winkel- bzw. Schwenkstellung der Klappe die Strömungsquerschnitte der Auslasszweige bestimmt. Es ist eine Weiterbildung, dass die Verzweigung als Ventil ausgestaltet ist, insbesondere als Proportionalventil.

Grundsätzlich kann der Dampfzufuhrkanal jedoch auch mindestens eine Verzweigung aufweisen, die keine Stelleinrichtung aufweist, was vorteilhafterweise besonders kostengünstig umsetzbar ist.

Analog zu dem verzweigten Dampfzufuhrkanal kann auch ein Dampfablasskanal mindestens eine Verzweigung bzw. verzweigte Zusammenführung aufweisen, welche eine Stelleinrichtung aufweist, die ansteuerbar ist, um einen Dampfdurchsatz durch die dann mehreren Einlasszweige variabel bzw. anteilig einzustellen. Der dann insbesondere eine Auslasszweig kann beispielsweise mit einem Lüfter verbunden sein.

Es ist eine Ausgestaltung, dass mindestens eine Verzweigung genau zwei Auslasszweige aufweist. Dies ist besonders einfach mittels eines Y-Rohrs umsetzbar. Ist dieser Verzweigung eine Stelleinrichtung zugeordnet, lässt sich dies ebenfalls besonders einfach umsetzen, z.B. in Form eines Y-Ventils.

Es ist eine Ausgestaltung, dass der Dampfzufuhrkanal über (genau) eine Dampfeintrittsoder Dampfzufuhröffnung verfügt, welche in alle möglichen Teilräume mündet. Diese Ausgestaltung ist besonders einfach umsetzbar, da keine Verzweigung benötigt wird, sondern lediglich eine Aufweitung ("Verbreiterung") des Dampfzufuhrkanals. Die Aufteilung des Dampfdurchsatzes in die einzelnen Teilräume kann dann durch die - ggf. durch einen Nutzer manuell vorgenommene - Position bzw. Platzierung der Raumteiler hinter der Dampfzufuhröffnung eingestellt werden. Je nachdem, an welcher Position entlang der Breite der Dampfzufuhröffnung ein Raumteiler anschließt, desto mehr oder weniger Dampf gelangt in die dem Raumteiler zugeordneten Teilräume.

Erfindungsgemäß ist vorgesehen, dass das Dampfgargerät eine Dampfgarschublade mit einem aus einem Schubladengehäuse aus- und einfahrbaren Schubfach ist. Die Schublade weist einen Dampfbehandlungsraum auf. Der Dampfbehandlungsraum wiederum weist einen wannenförmigen Gargutbehälter auf, der durch einen Deckel abdeckbar ist. Der Gargutbehälter und der darauf insbesondere dampfdicht aufgesetzte Deckel bilden den Dampfbehandlungsraum. Der Gargutbehälter ist insbesondere aus der Schublade nutzerseitig entnehmbar.

Erfindungsgemäß ist vorgesehen, dass der Gargutbehälter mindestens eine in einer Vorderseite bzw. in einem vorderseitigen Wandbereich eingebrachte Dampfzufuhröffnung aufweist, durch welche aus dem Dampfzufuhrkanal ausströmender Dampf in den Gargutbehälter gelangen kann, und auch mindestens eine in einer Rückseite eingebrachte Dampfaustritts- oder Dampfablassöffnung aufweist. So wird der Vorteil erreicht, dass auf konstruktiv einfache Weise ein gezielter Dampf/Luft-Strom durch den Dampfbehandlungsraum bzw. die Teilräume hindurch erzeugbar ist. Die mindestens eine Dampfzufuhröffnung des Gargutbehälters kann direkt oder über mindestens einen in den Gargutbehälter integrierten Aufsatzstutzen, dessen behandlungsraumseitige Mündung einer Dampfzufuhröffnung entspricht, an den Dampfzufuhrkanal anschließen.

Es ist eine Ausgestaltung, dass zumindest an der Vorderseite und an der Rückseite des Gargutbehälters Halterungen zum Einstecken mindestens eines Raumteilers, insbesondere einer Trennwand, vorhanden sind. So wird der Vorteil erreicht, dass bei Ansicht von vorne auf die Vorderseite mindestens zwei nebeneinander angeordnete Teilräume bereitgestellt werden, welche besonders einfach individuell mit Dampf beaufschlagbar sind. Die Halterungen können in Vorderansicht insbesondere hintereinander angeordnet sein, so dass die Raumteiler senkrecht zu der Vorderseite und der Rückseite angeordnet werden können.

Es ist eine Weiterbildung, dass eine Halterung an jeder der Wände einen Einsteckschlitz aufweist. Dies ergibt den Vorteil, dass die Raumteiler durch einfaches Einstecken von oben in die Halterungen einsetzbar sind. Der Einsteckschlitz kann beispielsweise durch zwei vertikal ausgerichtete, nebeneinander angeordnete Rippen gebildet sein.

Es ist eine Ausgestaltung, dass der Gargutbehälter an seiner Vorderseite mindestens zwei bei Frontansicht seitlich voneinander beabstandete Dampfzufuhröffnungen aufweist und die an der Vorderseite vorhandene mindestens eine Halterung zwischen den am weitesten voneinander beabstandeten (äußersten) Dampfzufuhröffnungen angeordnet ist. So wird vorteilhafterweise sichergestellt, dass auch die am weitesten links und rechts gebildeten Teilräume mit Dampf beaufschlagbar sind.

Es ist eine Ausgestaltung, dass der Gargutbehälter an seiner Rückseite mindestens zwei bei Frontansicht seitlich voneinander beabstandete Dampfablassöffnungen aufweist und die an der Rückseite vorhandene mindestens eine Halterung zwischen den am weitesten voneinander beabstandeten (äußersten) Dampfablassöffnungen angeordnet ist. So wird vorteilhafterweise sichergestellt, dass auch die am weitesten links und rechts gebildeten Teilräume mit Dampf beaufschlagbar sind. Dadurch wird vorteilhafterweise eine den Dampfzufuhröffnungen analoge Funktion bzw. Wirkung der Dampfablassöffnungen erreicht.

Es ist eine für den Fall, dass der Gargutbehälter an seiner Vorderseite mindestens zwei bei Frontansicht seitlich voneinander beabstandete Dampfzufuhröffnungen aufweist, besonders vorteilhafte Ausgestaltung, dass der Dampfzufuhrkanal genau eine Y-förmige Verzweigung mit genau zwei Auslasszweigen aufweist. Dies ist vorteilhafterweise besonders einfach umsetzbar, z.B. mittels eines einfachen Y-Ventils. Der Dampfbehandlungsraum kann dann durch einen Raumteiler in zwei individuell mit Dampf beaufschlagbare Teilräume unterteilt werden. Die beiden Auslasszweige führen zu einem jeweiligen Teilraum, falls ein Raumteiler in den Dampfbehandlungsraum eingesetzt worden ist. Insbesondere weist jeder der beiden Teilräume eine Dampfzufuhröffnung auf, vorteilhafterweise auch jeweils eine Dampfablassöffnung. Dadurch, dass die beiden Dampfzufuhröffnungen beidseitig der an der Vorderseite angebrachten mindestens einen Halterung angeordnet sind, wird sichergestellt, dass sich die beiden Teilräume unabhängig von der Position des Raumteilers mit Dampf beaufschlagen lassen, und zwar auch dann, wenn der Raumteiler an mehreren unterschiedlichen Halterungen und damit Positionen anordenbar ist.

Es ist eine Ausgestaltung, dass der mindestens eine Dampfablasskanal genau ein - verzweigter oder unverzweigter - Dampfablasskanal ist. Dies ist vorteilhafterweise besonders einfach umsetzbar. Der mindestens eine Dampfablasskanal weist insbesondere genau ein Dampfablassende auf. Ist genau ein unverzweigter Dampfablasskanal vorhanden, kann dieser über (genau) eine Dampfablassöffnung verfügt, welche in alle möglichen Teilräume mündet. Diese Ausgestaltung ist besonders einfach umsetzbar, da keine Verzweigung benötigt wird, sondern lediglich eine Aufweitung ("Verbreiterung") des Dampfzufuhrkanals. Die Aufteilung des Dampfdurchsatzes in den Dampfablasskanal kann dann durch die - ggf. durch einen Nutzer manuell vorgenommene - Position bzw. Platzierung der Raumteiler vor der Dampfablassöffnung eingestellt werden. Je nachdem, an welcher Position entlang der Breite der Dampfablassöffnung ein Raumteiler anschließt, desto mehr oder weniger Dampf wird aus den dem Raumteiler zugeordneten Teilräume abgelassen. Es ist eine Weiterbildung, dass der Raumteiler, insbesondere die Trennwand, umlaufend, d.h., an allen Randabschnitten, eine Dichtung aufweist. Dadurch wird vorteilhafterweise ein Austausch von Luft, Dampf, Kondensat usw. zwischen den davon abgetrennten Teilräumen besonders effektiv unterbunden. Für den Fall eines wannenförmigen, mittels eines Deckel abdeckbaren Gargutbehälters kann eine plattenförmige Trennwand z.B. mit ihrem unteren Randabschnitt auf dem Boden des Gargutbehälters an- bzw. aufliegen, mit den seitlichen Randabschnitten an der Vorderseite bzw. der Rückseite aufliegen und mit dem oberen Randabschnitt an dem Deckel aufliegen. Die Dichtung kann z.B. aus Gummi, Kunststoff, Keramik, usw. bestehen.

Es ist eine Ausgestaltung, dass der Raumteiler thermisch isolierend ausgebildet ist. So wird der Vorteil erreicht, dass auch eine thermische Beeinflussung der benachbarten Teilräume reduziert wird. der Raumteiler kann beispielsweise dadurch thermisch isolierend ausgebildet sein, dass sie aus einem thermisch schlecht leitenden Material, z.B. Kunststoff, ausreichender Dicke besteht oder mit einem speziellen thermisch isolierendem Material gefüllt ist.

Es ist eine Ausgestaltung, dass der Raumteiler mindestens ein elektrisches Heizelement aufweist. dadurch kann die Temperatur in einem oder beiden davon getrennten Teilräumen besonders effektiv beeinflusst werden. Es ist eine Weiterbildung, dass der Raumteiler, insbesondere die Trennwand, mindestens zwei elektrisch betriebene Heizelemente an jeder (Flach-)Seite aufweist, wobei das mindestens eine Heizelement einer Seite insbesondere von dem mindestens einen Heizelement der anderen Seite thermisch getrennt ist. So wird der Vorteil erreicht, dass sich die Teilräume mit einer besonders geringen gegenseitigen thermischen Beeinflussung individuell heizen lassen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird.
- Fig.1: zeigt in Draufsicht eine Skizze eines Schubfachs eines Dampfgargeräts in Form einer Dampfgarschublade;
- Fig.2: zeigt eine Skizze einer Verzweigung eines Dampfzufuhrkanals des Schubfachs;
- Fig.3: zeigt das Dampfgargerät in einer Ansicht von schräg vorne; und
- Fig.4: zeigt das Dampfgargerät in einer Ansicht von schräg hinten.

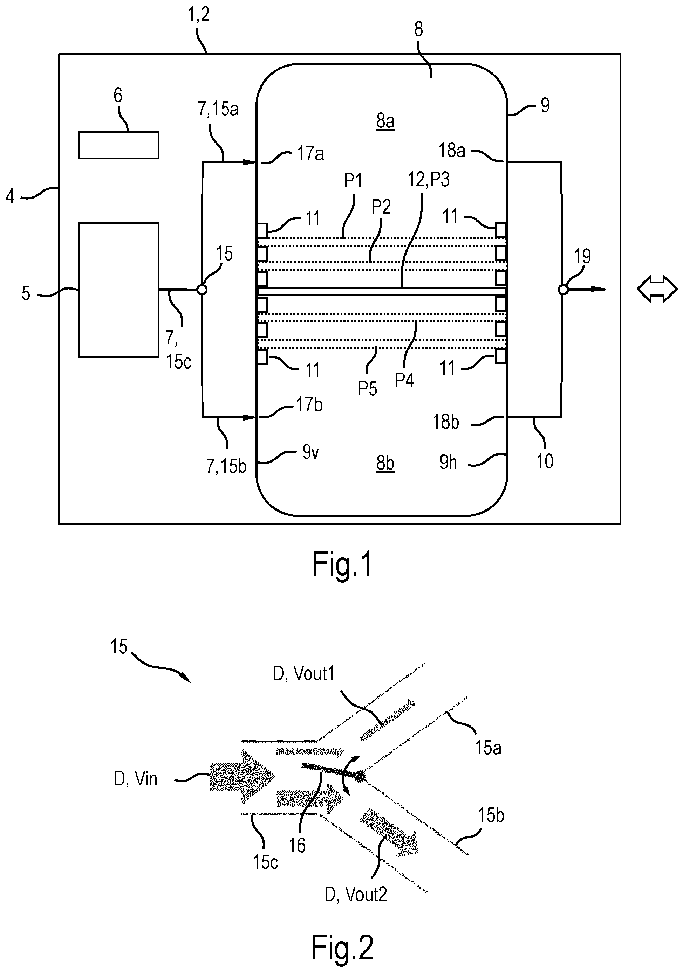

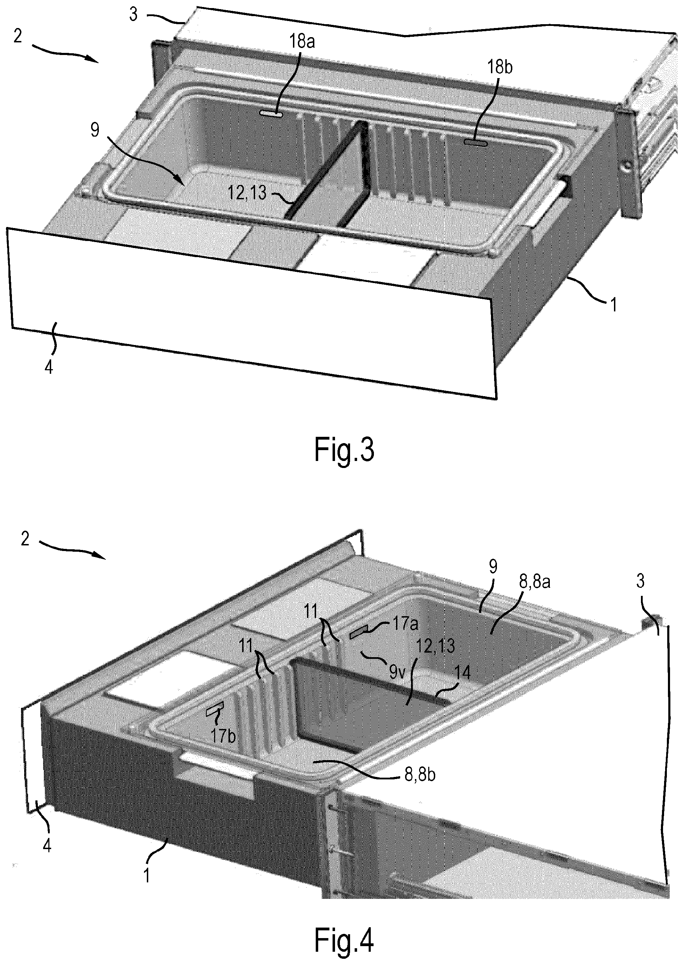

**Fig.1** zeigt in Draufsicht eine Skizze eines Schubfachs 1 eines Dampfgargeräts in Form einer Dampfgarschublade 2. Das Schubfach 1 ist horizontal in ein Schubladengehäuse 3 (siehe Fig.3 und Fig.4) ein- und ausfahrbar, wie durch den Doppelpfeil angedeutet, wobei im eingefahrenen Zustand eine Frontplatte 4 des Schubfachs 1 die frontseitige Öffnung des Schubladengehäuses 3 abschließt.

Das Schubfach 1 weist einen elektrisch betriebenen Nassdampferzeuger 5 auf, der dazu eingerichtet ist Wasser zum Sieden zu bringen, um Nassdampf D zu erzeugen. Der Nassdampferzeuger 5 ist mittels einer Steuereinrichtung 6 steuerbar, z.B. ein- und ausschaltbar. Insbesondere kann mittels der Steuereinrichtung 6 eine Heizleistung des Nassdampferzeugers 5 eingestellt werden, wodurch wiederum ein Volumen pro Zeiteinheit des erzeugten Nassdampfs D einstellbar ist. Dem Nassdampferzeuger 5 kann optional mindestens ein SHS-Dampferhitzer nachgeschaltet sein (o. Abb.).

An einem Dampfausgang des Nassdampferzeugers 5 ist ein Dampfzufuhrkanal 7 angeschlossen, der dazu eingerichtet ist, den von dem Nassdampferzeuger 5 erzeugten Nassdampf 5 oder - bei Vorhandensein eines SHS-Dampferhitzers - überhitzten Dampf in einen Dampfbehandlungsraum 8 zu leiten. Der Dampfbehandlungsraum 8 wird hier mittels eines wannenförmigen, oberseitig offenen Gargutbehälters 9 sowie eines auf den Gargutbehälter 9 dampfdicht aufsetzbaren Deckels (o. Abb.), z.B. aus Glas, gebildet. Der Gargutbehälter 9 ist insbesondere nutzerseitig entnehmbar. Er dient zur Aufnahme von Gargut, ggf. in Gargutbehältern wie GN-Behältern usw.

Ferner ist der Dampfbehandlungsraum 8 an einen Dampfablasskanal 10 anschließbar bzw. im eingesetzten Zustand angeschlossen, der dazu eingerichtet ist, Dampf aus dem Dampfbehandlungsraum 8 abzuleiten, z.B. in die Umgebung oder zu einem Wrasenabzugssystem (o. Abb.).

Der Gargutbehälter 9 weist innenseitig an seiner Vorderseite 9v und in Frontansicht an gleicher Stelle an seiner Rückseite 9h jeweils mehrere parallel zueinander angeordnete, vertikal ausgerichtete Rippen 11 auf, nämlich hier sechs parallel zueinander angeordnete Paare aus vorderseitigen und rückseitigen Rippen 11. Zwischen benachbarte Rippenpaare ist bei abgenommenem oder geöffnetem Deckel einen Raumteiler in Form einer plattenförmige Trennwand 12 mit rechteckiger Grundform nutzerseitig einsteckbar und auch wieder aussteckbar. Benachbarte Rippenpaare bilden somit eine Halterung für die Trennwand 12. Durch die vorliegend beispielhaft sechs Rippenpaare lässt sich die Trennwand 12 wahlweise in einer von fünf Positionen P1 bis P5 anordnen.

Ein Rand der Trennwand 12 ist umlaufend mit einer Dichtung 13 (siehe Fig.3 und Fig.4) versehen, die z.B. aus Gummi, Kunststoff, Keramik, usw. bestehen kann. Die Trennwand 12 kann optional speziell thermisch isolierend ausgebildet sein und/oder kann optional mindestens ein elektrisches Heizelement 14 aufweisen.

Bei eingesetzter Trennwand 12 und aufgesetztem Deckel ist der Dampfbehandlungsraum 8 in zwei voneinander dampfdicht (und damit insbesondere auch flüssigkeitsdicht) voneinander getrennte Teilräume 8a und 8b unterteilt. Durch die unterschiedlichen Positionen P1 bis P5 lassen sich die anteiligen Volumina der Teilräume 8a und 8b einstellen.

Der Dampfzufuhrkanal 7 ist so ausgestaltet, dass der von dem Nassdampferzeuger 5 erzeugte Dampf D - ggf. nach Umwandlung in überhitzen Dampf - sowohl in den ersten Teilraum 8a als auch in den zweiten Teilraum 8b geleitet wird. Der Dampfzufuhrkanal 7 weist dazu hier eine Y-förmige Verzweigung in Form eines Y-Ventils 15 auf, das genauer **in** **Fig.2** gezeigt ist. Das Y-Ventil 15 weist einen mit der Dampfseite des Nassdampferzeugers 5 verbundenen (Dampf-)Einlasszweig 15c und zwei davon abzweigende, symmetrisch ausgebildete (Dampf-)Auslasszweige 15a und 15b auf. Die Auslasszweige 15a und 15b verzweigen bzw. führen zu dem ersten Teilraum 8a bzw. zu dem zweiten Teilraum 8b.

Das Y-Ventil 15 verfügt über eine Stelleinrichtung in Form einer durch die Steuereinrichtung 6 elektrisch ansteuerbaren verschwenkbaren Ventilklappe 16. Durch Einstellung des Schwenkwinkels der Ventilklappe 16 lässt sich der Dampfdurchsatz Vin des durch den Einlasszweig 15c einströmenden Dampfs D variabel in einen Dampfdurchsatz Vout1 durch den Auslasszweig 15a und einen Dampfdurchsatz Vout2 durch den Auslasszweig 15b einstellen, wobei Vin = Vout1 + Vout2 gilt. Insbesondere kann Vout1 in einem Bereich [0 %, ..., 100 %] · Vin eingestellt werden. Damit kann folglich auch der in die Teilräume 8a bzw. 8b einströmende Volumenstrom des Dampfs D anteilig eingestellt werden, während Vin durch die in das Heizelement des Nassdampferzeugers 5 eingeprägte elektrische Leistung gezielt variierbar ist.

Die Auslasszweige 15a und 15b verzweigen bzw. führen zu in die Vorderseite 9v des Gargutbehälters 9 eingebrachte Dampfzufuhröffnungen 17a bzw. 17b, welche in die Teilräume 8a bzw. 8b führen. Ist der Gargutbehälter 9 nicht entnehmbar, können die Dampfzufuhröffnungen 17a bzw. 17b direkt den Mündungen der Auslasszweige 15a und 15b entsprechen. Ist der Gargutbehälter 9 entnehmbar, können die Dampfzufuhröffnungen 17a und 17b in einer Weiterbildung einfache Durchbrüche sein, die an die fest in dem Schubfach 1 angeordneten Abschnitte der Auslasszweige 15a bzw. 15b anschließen, und können in einer anderen Weiterbnildung Mündungen stutzenförmiger Kanalabschnitte des Gargutbehälters 9 sein, welche in die in dem Schubfach 1 angeordneten Abschnitte der Auslasszweige 15a bzw. 15b einsteckbar sind, insbesondere dampfdicht.

Die Dampfzufuhröffnungen 17a und 17b sind in Frontansicht so weit seitlich voneinander beabstandet, dass die Rippen 11 zwischen ihnen angeordnet sind. Dadurch wird sichergestellt, dass jeder der Teilräume 8a und 8b mit Dampf durch die Dampfzufuhröffnungen 17a bzw. 17b beaufschlagbar ist, und zwar unabhängig von der Position P1 bis P5 der Trennwand 12.

Analog zu den Dampfzufuhröffnungen 17a und 17b und in Frontansicht vorteilhafterwiese an gleicher Stelle weist der Gargutbehälter 9 an seiner Rückseite 9b zwei Dampfablassöffnungen 18a und 18b, durch welche Dampf bzw. eine Dampf-/Luft-/Wrasen-Gemisch aus dem jeweiligen Teilraum 8a bzw. 8b austreten und in den Dampfablasskanal 10 strömen kann. Auch die Dampfablassöffnungen 18a und 18b sind in Frontansicht so weit seitlich voneinander beabstandet, dass die an der Rückseite 9b angeordneten Rippen 11 zwischen ihnen angeordnet sind. Der Dampfablasskanal 10 weist eine Zusammenführung 19 auf, an der die an die beiden Dampfablassöffnungen 18a und 18b anschließenden Zweige zusammenlaufen. Insbesondere kann der Dampfablasskanal 10 eine zu Fig.2 umgekehrte Verzweigung bzw. Zusammenführung 19 mit zwei Einlasszweigen und einem Auslasszweig aufweisen, deren Strömungsquerschnitt z.B. durch eine Ventilklappe 16 einstellbar ist.

Selbstverständlich ist die vorliegende Erfindung nicht auf das gezeigte Ausführungsbeispiel beschränkt. Die Erfindung ist durch die beigefügten Ansprüche definiert.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

### Bezugszeichenliste

- 1: Schubfach
- 2: Dampfgarschublade
- 3: Schubladengehäuse
- 4: Frontplatte
- 5: Nassdampferzeuger
- 6: Steuereinrichtung
- 7: Dampfzufuhrkanal
- 8: Dampfbehandlungsraum
- 8a: Erster Teilraum des Dampfbehandlungsraums
- 8b: Zweiter Teilraum des Dampfbehandlungsraums
- 9: Gargutbehälter
- 9v: Vorderseite des Gargutbehälters
- 9h: Rückseite des Gargutbehälters
- 10: Dampfablasskanal
- 11: Rippe
- 12: Trennwand
- 13: Dichtung
- 14: Elektrisches Heizelement
- 15: Y-Ventil
- 15a: Erster Auslasszweig des Y-Ventils
- 15b: Zweiter Auslasszweig des Y-Ventils
- 15c: Einlasszweig des Y-Ventils
- 16: Ventilklappe
- 17a: Dampfzufuhröffnung
- 17b: Dampfzufuhröffnung
- 18a: Dampfablassöffnung
- 18b: Dampfablassöffnung
- D: Nassdampf
- P1-P5: Position der Trennwand
- Vin: Dampfdurchsatz in das Y-Ventil
- Vout1: Dampfdurchsatz durch den ersten Auslasszweig
- Vout2: Dampfdurchsatz durch den zweiten Auslasszweig

## Patentansprüche

1. Dampfgargerät (2), insbesondere Haushalts-Dampfgargerät, in Form einer Dampfgarschublade (2), aufweisend
- einen mittels mindestens eines Raumteilers (12) in mindestens zwei Teilräume (8a, 8b) unterteilbaren Dampfbehandlungsraum (8), welcher einen wannenförmigen Gargutbehälter (9) aufweist, der durch einen Deckel abdeckbar ist,
- mindestens einen Raumteiler (12), der dazu eingerichtet ist, den Dampfbehandlungsraum (8) oder einen Teilraum (8a, 8b) davon dampfdicht in zwei Teilräume (8a, 8b) zu unterteilen,
- einen Nassdampferzeuger (5),
- einen Dampfzufuhrkanal (7), der dazu eingerichtet ist, von dem Nassdampferzeuger (5) erzeugten Dampf (D) in den Dampfbehandlungsraum (8) zu leiten,
- mindestens einen Dampfablasskanal (10), der dazu eingerichtet ist, Dampf (D) aus dem Dampfbehandlungsraum (8) abzuleiten,
wobei
- der Dampfzufuhrkanal (7) dazu eingerichtet ist, den von dem Nassdampferzeuger (5) erzeugten Dampf (D) in jeden der Teilräume (8a, 8b) zu leiten,
und wobei der Gargutbehälter (9)
- mindestens eine in einer Vorderseite (9v) eingebrachte Dampfzufuhröffnung (17a, 17b) aufweist, durch welche aus dem Dampfzufuhrkanal (7) ausströmender Dampf (D) in den Gargutbehälter (9) strömen kann, und
- mindestens eine in einer Rückseite (9h) eingebrachte Dampfablassöffnung (18a, 18b) aufweist.

2. Dampfgargerät (2) nach Anspruch 1, wobei der Dampfzufuhrkanal (7)
- einen mit dem Nassdampferzeuger (5) verbundenen Dampfeingang (15c) und mindestens eine Verzweigung (15) mit mindestens zwei zu dem Dampfbehandlungsraum (8) führenden Auslasszweigen (15a, 15b) aufweist und
- mindestens eine Verzweigung (15) eine Stelleinrichtung (16) aufweist, die ansteuerbar ist, um einen Dampfdurchsatz (Vout1, Vout2) durch die Auslasszweige (15a, 15b) anteilig einzustellen.

3. Dampfgargerät (2) nach Anspruch 2, wobei mindestens eine Verzweigung (15) genau zwei Auslasszweige (15a, 15b) aufweist.

4. Dampfgargerät (2) nach Anspruch 1, wobei der Dampfzufuhrkanal (7) über eine Dampfablassöffnung verfügt, welche in alle möglichen Teilräume (8a, 8b) mündet.

5. Dampfgargerät (2) nach einem der vorhergehenden Ansprüche, wobei zumindest an der Vorderseite (9v) und an der Rückseite (9h) des Gargutbehälters (9) Halterungen (11) zum Einstecken mindestens eines Raumteilers (12) vorhanden sind, wobei
- der Gargutbehälter (9) an seiner Vorderseite (9v) mindestens zwei seitlich voneinander beabstandete Dampfzufuhröffnungen (17a, 17b) aufweist,
- die an der Vorderseite (9v) vorhandene mindestens eine Halterung (11) zwischen den am weitesten voneinander beabstandeten Dampfzufuhröffnungen (17a, 17b) angeordnet ist,
- der Gargutbehälter (9) an seiner Rückseite (9h) mindestens zwei seitlich voneinander beabstandete Dampfablassöffnungen (18a, 18b) aufweist und
- die an der Rückseite (9h) vorhandene mindestens eine Halterung (11) zwischen den am weitesten voneinander beabstandeten Dampfablassöffnungen (18a, 18b) angeordnet ist.

6. Dampfgargerät (2) nach einem der vorhergehenden Ansprüche einschließlich den Ansprüchen 3 und 5, wobei
- der Dampfzufuhrkanal (7) genau eine Y-förmige Verzweigung mit genau zwei Auslasszweigen (15a, 15b) aufweist und
- die beiden Auslasszweige (15a, 15b) zu jeweils einem von zwei Dampfzufuhröffnungen (17a, 17b) des Gargutbehälters (9) führen.

7. Dampfgargerät (2) nach einem der vorhergehenden Ansprüche, wobei der mindestens eine Dampfablasskanal (10) genau ein Dampfablasskanal (10) ist.

8. Dampfgargerät (2) nach einem der vorhergehenden Ansprüche, wobei der Raumteiler (12) thermisch isolierend ausgebildet ist.

9. Dampfgargerät (2) nach einem der vorhergehenden Ansprüche, wobei der Raumteiler (12) mindestens ein elektrisches Heizelement (14) aufweist.

## Claims

1. Steam cooking appliance (2), in particular household steam cooking appliance, in the form of a steam cooking drawer (2) having
- a steam treatment chamber (8) which can be divided by means of at least one partition (12) into at least two sub-chambers (8a, 8b) and which has a trough-shaped food container (9) which can be covered by a lid,
- at least one partition (12) which is designed to divide the steam treatment chamber (8) or a sub-chamber (8a, 8b) thereof in a steam-tight manner into two sub-chambers (8a, 8b),
- a wet steam generator (5),
- a steam supply channel (7) which is designed to conduct steam (D) generated by the wet steam generator (5) into the steam treatment chamber (8),
- at least one steam outlet channel (10) which is designed to discharge steam (D) from the steam treatment chamber (8),
wherein
- the steam supply channel (7) is designed to conduct the steam (D) generated by the wet steam generator (5) into each of the sub-chambers (8a, 8b),
and wherein the food container (9) has
- at least one steam supply opening (17a, 17b) which is incorporated in a front side (9v) and through which steam (D) flowing out of the steam supply channel (7) can flow into the food container (9), and
- at least one steam outlet opening (18a, 18b) incorporated in a rear side (9h).

2. Steam cooking appliance (2) according to claim 1, wherein the steam supply channel (7) has
- a steam inlet (15c) connected to the wet steam generator (5) and at least one branch (15) with at least two outlet branches (15a, 15b) leading to the steam treatment chamber (8) and
- at least one branch (15) has an adjusting facility (16) which can be controlled in order to adjust in a proportional manner a steam throughput (Vout1, Vout2) through the outlet branches (15a, 15b).

3. Steam cooking appliance (2) according to claim 2, wherein at least one branch (15) has exactly two outlet branches (15a, 15b).

4. Steam cooking appliance (2) according to claim 1, wherein the steam supply channel (7) has a steam outlet opening which opens into all possible sub-chambers (8a, 8b).

5. Steam cooking appliance (2) according to one of the preceding claims, wherein holders (11) for inserting at least one partition (12) are present at least on the front side (9v) and on the rear side (9h) of the food container (9), wherein
- the food container (9) has on its front side (9v) at least two steam supply openings (17a, 17b) which are laterally spaced apart from one another,
- the at least one holder (11) which is present on the front side (9v) is arranged between the steam supply openings (17a, 17b) spaced furthest apart from one another,
- the food container (9) has on its rear side (9h) at least two steam outlet openings (18a, 18b) which are laterally spaced apart from one another and
- the at least one holder (11) which is present on the rear side (9h) is arranged between the steam outlet openings (18a, 18b) spaced furthest apart from one another.

6. Steam cooking appliance (2) according to one of the preceding claims including claims 3 and 5, wherein
- the steam supply channel (7) has exactly one Y-shaped branch with exactly two outlet branches (15a, 15b) and
- the two outlet branches (15a, 15b) lead in each case to one of two steam supply openings (17a, 17b) of the food container (9).

7. Steam cooking appliance (2) according to one of the preceding claims, wherein the at least one steam outlet channel (10) is exactly one steam outlet channel (10).

8. Steam cooking appliance (2) according to one of the preceding claims, wherein the partition (12) is configured to be thermally insulating.

9. Steam cooking appliance (2) according to one of the preceding claims, wherein the partition (12) has at least one electrical heating element (14).

## Revendications

1. Appareil de cuisson à la vapeur (2), en particulier appareil de cuisson à la vapeur ménager, sous la forme d'un tiroir de cuisson à la vapeur (2), présentant
- une chambre de traitement à la vapeur (8) subdivisible au moyen d'au moins un séparateur (12) en au moins deux chambres partielles (8a, 8b), laquelle présente un récipient de denrées à cuire (9) en forme de bac, qui peut être couvert par un couvercle,
- au moins un séparateur (12), aménagé pour subdiviser de façon étanche à la vapeur la chambre de traitement à la vapeur (8) ou une chambre partielle (8a, 8b) de celle-ci en deux chambres partielles (8a, 8b),
- un générateur de vapeur humide (5),
- un conduit d'amenée de vapeur (7), aménagé pour diriger la vapeur (D) générée par le générateur de vapeur humide (5) dans la chambre de traitement à la vapeur (8),
- au moins un conduit d'évacuation de vapeur (10), aménagé pour évacuer la vapeur (D) de la chambre de traitement à la vapeur (8),
dans lequel
- le conduit d'amenée de vapeur (7) est aménagé pour diriger la vapeur (D) générée par le générateur de vapeur humide (5) dans chacune des chambres partielles (8a, 8b),
et dans lequel le récipient de denrées à cuire (9)
- présente au moins un orifice d'amenée de vapeur (17a, 17b) inséré dans une face avant (9v), qui permet à la vapeur (D) s'écoulant du conduit d'amenée de vapeur (7) de s'écouler dans le récipient de denrées à cuire (9), et
- présente au moins un orifice d'évacuation de vapeur (18a, 18b) inséré dans une face arrière (9h).

2. Appareil de cuisson à la vapeur (2) selon la revendication 1, dans lequel le conduit d'amenée de vapeur (7)
- présente une entrée de vapeur (15c) reliée au générateur de vapeur humide (5) et au moins un branchement (15) avec au moins deux branches de sortie (15a, 15b) menant vers la chambre de traitement à la vapeur (8) et
- au moins un branchement (15) présente un dispositif de commande (16), qui peut être commandé pour régler proportionnellement un débit de vapeur (Vout1, Vout2) à travers les branches de sortie (15a, 15b).

3. Appareil de cuisson à la vapeur (2) selon la revendication 2, dans lequel au moins un branchement (15) présente exactement deux branches de sortie (15a, 15b).

4. Appareil de cuisson à la vapeur (2) selon la revendication 1, dans lequel le conduit d'amenée de vapeur (7) dispose d'un orifice d'évacuation de vapeur, qui débouche dans toutes les chambres partielles (8a, 8b) possibles.

5. Appareil de cuisson à la vapeur (2) selon l'une des revendications précédentes, dans lequel des supports (11) pour l'insertion d'au moins un séparateur (12) sont présents au moins sur la face avant (9v) et sur la face arrière (9h) du récipient de denrées à cuire (9), dans lequel
- le récipient de denrées à cuire (9) présente sur sa face avant (9v) au moins deux orifices d'amenée de vapeur (17a, 17b) distants latéralement l'un de l'autre,
- l'au moins un support (11) présent sur la face avant (9v) est disposé entre les orifices d'amenée de vapeur (17a, 17b) les plus distants l'un de l'autre,
- le récipient de denrées à cuire (9) présente sur sa face arrière (9h) au moins deux orifices d'évacuation de vapeur (18a, 18b) distants latéralement l'un de l'autre et
- l'au moins un support (11) présent sur la face arrière (9h) est disposé entre les orifices d'évacuation de vapeur (18a, 18b) les plus distants l'un de l'autre.

6. Appareil de cuisson à la vapeur (2) selon l'une des revendications précédentes y compris les revendications 3 et 5, dans lequel
- le conduit d'amenée de vapeur (7) présente exactement un branchement en Y avec exactement deux branches de sortie (15a, 15b) et
- les deux branches de sortie (15a, 15b) mènent respectivement vers un de deux orifices d'amenée de vapeur (17a, 17b) du récipient de denrées à cuire (9).

7. Appareil de cuisson à la vapeur (2) selon l'une des revendications précédentes, dans lequel l'au moins un conduit d'évacuation de vapeur (10) est exactement un conduit d'évacuation de vapeur (10).

8. Appareil de cuisson à la vapeur (2) selon l'une des revendications précédentes, dans lequel le séparateur (12) est formé de façon thermiquement isolante.

9. Appareil de cuisson à la vapeur (2) selon l'une des revendications précédentes, dans lequel le séparateur (12) présente au moins un élément chauffant (14) électrique.
